(19) Europäisches Patentamt / European Patent Office / Office européen des brevets

(11) **EP 2 906 668 B1**

(12) **EUROPÄISCHE PATENTSCHRIFT**

(45) Veröffentlichungstag und Bekanntmachung des Hinweises auf die Patenterteilung:
**04.01.2017 Patentblatt 2017/01**

(51) Int Cl.:
*C10M 103/06* *(2006.01)*     *C01G 39/00* *(2006.01)*
*C10N 10/02* *(2006.01)*     *C10N 10/08* *(2006.01)*
*C10N 10/10* *(2006.01)*     *C10N 10/12* *(2006.01)*
*C10N 30/06* *(2006.01)*     *C10N 30/08* *(2006.01)*
*C10N 40/20* *(2006.01)*     *C10N 40/36* *(2006.01)*

(21) Anmeldenummer: **13776962.6**

(22) Anmeldetag: **09.10.2013**

(86) Internationale Anmeldenummer:
**PCT/EP2013/003022**

(87) Internationale Veröffentlichungsnummer:
**WO 2014/056605 (17.04.2014 Gazette 2014/16)**

(54) **BESCHICHTUNGEN FÜR HOCHTEMPERATURANWENDUNGEN MIT TRIBOLOGISCHER BEANSPRUCHUNG**

COATINGS FOR HIGH-TEMPERATURES USES WITH TRI-BIOLOGICAL STRESS

REVÊTEMENTS POUR APPLICATIONS À HAUTE TEMPÉRATURE SOUS CONTRAINTE TRIBOLOGIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2012 DE 102012022114**
**14.12.2012 EP 12008340**

(43) Veröffentlichungstag der Anmeldung:
**19.08.2015 Patentblatt 2015/34**

(73) Patentinhaber: **Oerlikon Surface Solutions AG, Pfäffikon**
**8808 Pfäffikon (CH)**

(72) Erfinder:
• **SOEBISCH, Mathias Lukas**
**88142 Wasserburg (DE)**
• **RAMM, Juergen**
**CH-7304 Maienfeld (CH)**

(74) Vertreter: **Kempkens, Anke**
**Hofgraben 486**
**86899 Landsberg (DE)**

(56) Entgegenhaltungen:
EP-A1- 1 712 654     WO-A1-2011/095292
DE-A1-102010 053 751     US-A- 4 465 604

• **SUSZKO T ET AL: "The role of surface oxidation in friction processes on molybdenum nitride thin films", SURFACE AND COATINGS TECHNOLOGY, ELSEVIER, AMSTERDAM, NL, Bd. 194, Nr. 2-3, 1. Mai 2005 (2005-05-01) , Seiten 319-324, XP027609252, ISSN: 0257-8972 [gefunden am 2005-05-01]**
• **PAPPACENA K E ET AL: "Residual stresses, interfacial adhesion and tribological properties of MoN/Cu composite coatings", WEAR, ELSEVIER SEQUOIA, LAUSANNE, CH, Bd. 278, 3. Januar 2012 (2012-01-03), Seiten 62-70, XP028459859, ISSN: 0043-1648, DOI: 10.1016/J.WEAR.2012.01.007 [gefunden am 2012-01-12]**
• **OZTURK ET AL: "Comparative tribological behaviors of TiN?, CrN? and MoN?Cu nanocomposite coatings", TRIBOLOGY INTERNATIONAL, BUTTERWORTH SCIENTIFIC LDT, GUILDFORD, GB, Bd. 41, Nr. 1, 18. September 2007 (2007-09-18), Seiten 49-59, XP022257470, ISSN: 0301-679X, DOI: 10.1016/J.TRIBOINT.2007.04.008**

## Beschreibung

Die vorliegende Erfindung bezieht sich auf Verschleissschutz-Beschichtungen für Komponenten, Bauteile und Werkzeuge welche in der Anwendung hohen Temperaturen ausgesetzt sind. Komponenten, Bauteile und Werkzeuge werden im Folgenden gemeinsam als Substrate bezeichnet.

## Aufgabe der Erfindung

Applikationen bei "hohen" Temperaturen stellen extreme Anforderungen an die Oberflächenfunktionalität von Bauelementen, Komponenten und Werkzeugen im Hinblick auf mechanische, strukturelle und chemische Stabilität dar. Um die langzeitstabile Oberflächenfunktionalität zu gewährleisten und somit die industrielle Prozessproduktivität zu sichern, stellt die vorliegende Erfindung Hartstoffschichtsysteme für Bauelemente, bewegliche Komponenten und Form- und Schneidwerkzeuge zur Verfügung, die in zufriedenstellender Weise den Verschleiss der Komponenten und der Werkzeuge bei verschiedenen industriellen Applikationen mit deutlich erhöhten thermischen Belastungen (d.h. Temperaturen von mehr als 400°C, im folgenden *Hochtemperaturapplikation* genannt) verbessert. Die grundlegenden Eigenschaften dieses hochtemperaturstabilen Hartstoffschichtsystems sind wie folgt: i) Ausreichender Abrasiv-Verschleissschutz, ii) ausreichender Adhäsiv-Verschleissschutz, iii) ausreichende Schichthaftung und iv) ausreichende Temperaturstabilität (Phasenstabilität und Oxidationsbeständigkeit).

## Beschreibung der Erfindung

Erfindungsgemäss wird ein Beschichtungssystem gemäß Anspruch 1 vorgeschlagen, welches als Basis ein Mehrlagenschichtsystem umfasst, auf dem ein Top-Schmierschichtsystem mit mindestens einer Lage vorgesehen ist. Dieses Top-Schmierschichtsystem schliesst das Beschichtungssystem nach aussen hin ab. Das Top-Schmierschichtsystem enthält als Hauptbestandteil Molybdän und kann je nach vorherrschendem Hochtemperatur-Tribokontakt und der daraus resultierenden mechanischen und chemischen Beanspruchung der Oberfläche, eine angepasste Architektur/Mikrostruktur sowie eine angepasste Zusammensetzung aufweisen.

Im Folgenden werden nähere Ausführungen zur bevorzugten Architektur/Mikrostruktur und Zusammensetzung gegeben. Vereinfachend wird im Folgenden das Top-Schmierschichtsystem auch Top-Schmierschicht genannt.

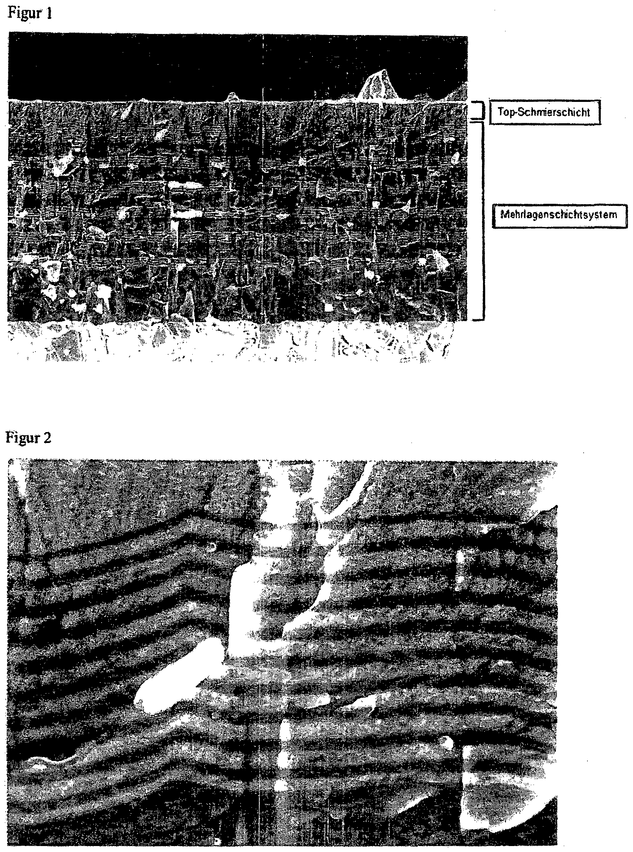

    Figur 1 zeigt eine Erfindungsgemässe Beschichtung
    Figur 2 zeigt einen Ausschnitt einer erfindungsgemässen Beschichung (Nanolagen)

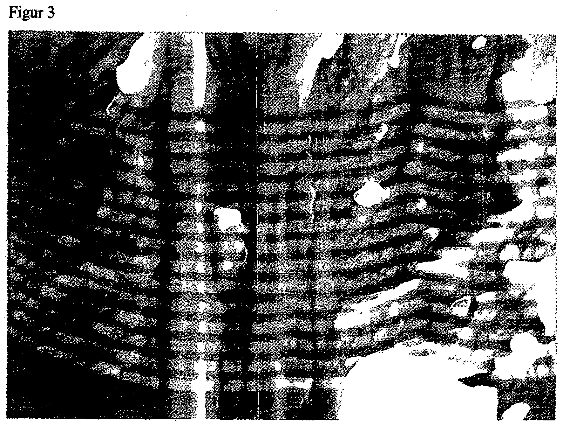

    Figur 3 zeigt einen Ausschnitt einer erfindungsgemässen Beschichung (Nanolagen)

Die Architektur dieser Top-Schmierschicht kann charakterisiert sein durch i) einen Monolayer Aufbau, ii) einen Bilayer Aufbau, iii) einen Multilayer Aufbau oder iv) einen nanolaminiertenAufbau, wobei im Fall ii)-iv) durch den Aufbau die Mikrostruktur oder der Chemismus verändert wird. Gradierungen der Mikrostruktur und/oder der Zusammensetzung sind jedoch in allen Fällen i)-iv) möglich und angebracht, um für die jeweilige Applikation das Schmierverhalten in Abstimmung mit den erforderlichen mechanischen Eigenschaften zu gewährleisten. Grundsätzlich sind in allen Fällen die Schichten von nanoskaliger Natur.
Die chemische Zusammensetzung der Top-Schmierschicht ist im Allgemeinem wie folgt charakterisiert: $Mo_a$-$X_b$-$Y_c$ wobei a, b und c die atomare Konzentration der jeweiligen Bestantteile angibt und a+b+c=1 gilt und Molybdän als dominierendem Bestandteil realisiert ist, d.h. $0 \leq b < a$ und $0 \leq c < a$ gilt, mit X als variablem Metall-Bestandteil: B, Si, V, W, Zr, Cu und Ag oder eine Kombination daraus, mit Y als variablem Nichtmetall-Bestandteil: C, O und N oder eine Kombination daraus.

Besonders bevorzugt bei Hochtemperaturapplikationen oberhalb von 500°C sind Top-Schmierschichten mit folgenden Zusammensetzungen:

- Mo und/oder Mo-Cu
- Mo-N und/oder Mo-Cu-N
- Mo-O-N und/oder Mo-Cu-O-N
- Mo-Si-B und/oder Mo-Si-B-N
- Mo-Si-B-O-N

Bevorzugt enthält die Top-Schmierschicht mindesten 95at% Molybdän. Besonders bevorzugt enthält die Top-Schmierschicht kein Aluminium. Vorzugsweise beträgt die Schichtdicke der Top-Schmierschicht zwischen 0.25 und 1.5 $\mu$m, besonders bevorzugt zwischen 0.5 und 1.0 $\mu$m.

Bevorzugter Weise wird für eine bestimmte Hochtemperaturapplikation (Temperatur, tribologischer Kontakt, Umgebungsatmosphäre und Dauer) ein passendes Paar aus Top-Schmierschicht und darunterliegendem Schichtsystem evaluiert.

Im Folgenden soll beispielsweise das Zusammenspiel einer Mo-X-Y Top-Schmierschicht mit einem darunterliegenden Mehrlagenschichtsystem erläutert werden. Der Wirkungsmechanismus der Top-Schmierschicht in Kombination mit dem darunterliegenden Mehrlagenschichtsystem kann im Hinblick auf mechanische, strukturelle und chemische Stabilität bei diversen Hochtemperaturapplikationen vermutlich wie folgt beschrieben werden: Während die Top-Schmierschicht ausschliesslich im Initialstadium des tribologischen Kontakts zum Einsatz kommt, indem diese Schmierschicht bei erhöhten Temperaturen unter Bildung einer Festkörperschmierphase (v.a. Metalloxide) kontinuierlich aufgebraucht wird, und somit das tribologische Einlaufverhalten optimiert (d.h. also den initialen tribologischen Kontakt für den weiteren Verlauf optimal konditioniert), ist das darunterliegende Mehrlagenschichtsystem (nach erfolgter Oberflächenkonditionierung durch die Top-Schmierschicht) für eine langanhaltende und hochtemperaturstabile Aufrechterhaltung des (abrasiven und adhäsiven) Verschleissschutzes zuständig. Es ist anzunehmen, dass bei Temperaturen ab ca. 400°C die Oxidation der Top-Schmierschicht einsetzt (in Abhängigkeit von der genauen Mikrostruktur und Zusammensetzung). Die Oxidation der in der Top-Schmierschicht enthaltenden Metalle wie B, V, W, Zr, Cu, Ag und Mo kann zur Bildung von sogenannten "Magneli Phasen" führen. Es ist bekannt, dass solche Magneli Phasen exzellente Schmiereigenschaften (Festkörperschmierung) haben. Das darunter liegende Mehrlagenschichtsystem dagegen bietet durch seine Architektur in Abstimmung mit dem Schichtlagenchemismus nicht nur die erforderliche mechanische, strukturelle und chemische Hochtemperaturstabilität, sondern auch die wünschenswerte und im vorliegenden Fall kontrollierbare Bildung von Festkörperschmierphasen (v.a. Metalloxide; es kann zur Bildung von sogenannten "Magneli Phasen" kommen) im stabilen Langzeiteinsatz bei hohen Temperaturen bis zu 1000°C.

Erfindungsgemäss umfasst das Mehrlagenschichtsystem zumindest eine hochtemperaturstabilisierte Schicht (HT-Schicht). Eine solche kann beispielsweise eine Zusammensetzung entsprechend $(Me1, Me2, Mo)N$ aufweisen

In einer besonders bevorzugten Ausführungsform der vorliegenden Erfindung enthält das Mehrlagenschichtsystem zumindest zwei Schichtpakete in welchen mit zunehmendem Abstand vom Substrat eine schmieraktive Schicht auf eine HT-Schicht folgt. Eine schmieraktive Schicht kann der HT-Schicht entsprechen jedoch mit erhöhtem Molybdänanteil aufgebaut sein. Dementsprechend würden die molybdänarmen Schichten die HT-Schichten bilden während die molybdänreichen Schichten die schmieraktiven Schichten bilden können. Vorzugsweise liegt die maximale Molybdänkonzentration in den molybdänreichen Schichten bei mindestens 10 at.%, besonders bevorzugt mindestens 20 at.% über der minimalen Molybdänkonzentration der benachbarten molybdänarmen Schichten. Die molybdänreichen Schichten des Wechselschichtsystems können beispielsweise sowohl mittels PVD-Verfahren unter Verwendung von Einzelkomponenten Materialquellen (Targets) als auch mittels PVD-Verfahren unter Verwendung von Mehrkomponenten Materialquellen abgeschieden werden.

Die molybdänreichen Schichten des Wechselschichtsystems können, um die Schmierung weiter zu verbessern, ein oder mehrere weitere Elemente aus der Gruppe gebildet durch C, O, B, Si, V, W, Zr, Cu, und Ag enthalten.

Die molybdänarmen Schichten des Wechselschichtsystems können, um die Hochtemperaturstabilität weiter zu verbessern, z.B. durch Verbesserung der mechanischen und chemischen Eigenschaften, ein oder mehrere weitere Elemente und deren Mischungen aus der Gruppe gebildet durch B, Si, W und Zr enthalten.

Auf dieses Mehrlagenschichtsystem wird erfindungsgemäss eine Top-Schmierschicht wie oben angegeben angeordnet.

Erfindungsgemässe Substrate, d.h. mit dem erfindungsgemässen Beschichtungssystem beschichtete Substrate können überall dort mit Vorteil eingesetzt werden, wo es in der Anwendung zu hohen Temperaturen und zur tribologischen Beanspruchung kommt. Dies ist beispielsweise beim direkten Presshärten der Fall. Als Beispiele seien hier genannt:

- Direktes Presshärten von AlSi-beschichteten 22MnB5 USSH-Blechen
- Direktes Presshärten von unbeschichteten 22MnB5 USSH-Blechen

Weitere Anwendungsbeispiele sind

- Schmieden von hochfesten Metallblechen
- Zerspanung und Verformung insbesondere von hochfesten Titan- und Nickellegierungen
- Bauteile und bewegliche Komponenten in Verbrennungsmotoren und im Turboladerbereich
- Aluminium- und Magnesiumdruckguss
- Spritzgiessen und Extrusion insbesondere von hochfesten Kunststoffen oder Aluminium.

Gemäss einem ersten Beispiel der vorliegenden Erfindung wird auf ein Presshärte-Formwerkzeug eine 2$\mu$m dicke $(Ti_{0.5}Al_{0.5})N$ Schicht aufgebracht. Anschliessend folgen 5 Schichtpakete, wobei jedes Schichtpaket eine 0.5$\mu$m dicke $(Ti_{0.3}Al_{0.3}Mo_{0.4})N$ Schicht enthält auf die eine 0.5$\mu$m dicke $(Ti_{0.5}Al_{0.5})N$ Schicht folgt. Den Abschluss dieses Mehrlagenschichtsystems bildet eine 0.5$\mu$m dicke $(Ti_{0.3}Al_{0.3}Mo_{0.4})N$ Schicht. Das Gesamtschichtsystem dagegen wird durch eine 0.5$\mu$m dicke $Mo_{0.95}Si_{0.03}B_{0.02}$ als Top-Schmierschicht abgeschlossen. Als geeignete Top-Schmierschichten sind in diesem konkreten Fall auch $MoN$ und $Mo_{0.95}Cu_{0.05}N$ von besonderer Relevanz.

Gemäss einem zweiten Beispiel der vorliegenden Erfindung wird auf ein Presshärte-Formwerkzeug eine 2$\mu$m dicke $(Al_{0.65}Cr_{0.25}Si_{0.05})N$ Schicht aufgebracht wobei Si optional auch weggelassen werden kann. Anschliessend folgen 5 Schichtpakete, wobei jedes Schichtpaket eine 0.5$\mu$m dicke $(Al_{0.42}Cr_{0.18}Mo_{0.35}Cu_{0.05})N$ Schicht enthält auf die eine 0.5$\mu$m dicke $(Al_{0.7}Cr_{0.3})N$ Schicht folgt. Den Abschluss dieses Mehrlangenschichtsystems bildet eine 0.5$\mu$m dicke $(Al_{0.42}Cr_{0.18}Mo_{0.35}Cu_{0.05})N$ Schicht. Das Gesamtschichtsystem dagegen wird durch eine 0.5$\mu$m dicke $MoN$ Schicht als Top-Schmierschicht abgeschlossen.

Bevorzugt ist ausserdem eine Beschichtung mit Mehrlagenschichtsystem umfassend Verbindungen (C und/oder N und/oder O) von Al und B und den Elementen der IV und V Nebengruppe einerseits und Mo-Verbindungen (C und/oder B und/oder N und/oder O) andererseits, und mit Top-Schmierschicht die eine Mo-Verbindung mit Mo als Hauptkomponente enthält und deren Dicke gleich gross, bevorzugt dicker als die der Mohaltigen Schichten im Multilayer ist.

Besonders bevorzugt ist die Beschichtung mit Mehrlagenschichtsystem wie oben, bei dem der integrale Anteil von Mo am Gesamtanteil der Metalle kleiner 50 at.% ist.

Weitere Versuche haben zu folgenden Merkmalen von besonders bevorzugten Ausführungsformen der vorliegenden Erfindung geführt:

- Die schmieraktiven Schichten (TiAlMoN) sollen vorteilhafter Weise einen (gemittelten; wenn gemessen mit EDX bei 10kV) Mo-Gehalt von 20-60 at.% haben, bevorzugt 25-35 at.%, besonders bevorzugt 30 at.% haben.

- Der (gemittelte) Mo-Gehalt kann auch über die Architektur (Nanolayer-Struktur) der schmieraktiven Schichten gesteuert werden (siehe Bilder unten). Unter Verwendung von 2 Target-Typen (Mo und Ti-Al) ist technisch so etwas über i) eine Änderung der Rotationsgeschwindigkeit und/oder über ii) eine Änderung der Target-Parameter aller gleichzeitig laufender Targets realisierbar.

- Die Dicke der MoN-reichen Schichten im TiAlMoN (hellen Schichten im Nanolayer) kann variieren zischen 10-60nm, bevorzugt zwischen 20-50nm, besonders bevorzugt zwischen 30-40nm. Die optimale Dicke der MoN-reichen Schichten im TiAlMoN scheint bei ca. 40nm zu liegen.

- Ein Mo-Gehalt von ca. 30 at.% in den schmieraktiven Schichten (TiAlMoN) kann bei Temperaturen von ca. 800-900°C sehr günstig die Oberflächenoxidation vorantreiben (ohne das Gesamtschichtgefüge nachteilig zu beeinflussen), so dass stets ausreichend (Oxid) Schmiermittel angeboten wird, um im Langzeiteinsatz ein Aufschmieren von AlSi zu unterbinden. Dies haben applikationsnahe Tests (z.B. HT-SRV-Test mit kontinuierlichem Wechsel des Usibor®-Blechs wobei stets die gleiche Schicht getestet wird) gezeigt.

- Sehr verteilhaft ist auch die Tatsache, dass bei Variation des Mo-Gehalts im Bereich von 20-40 at.% in den schmieraktiven Schichten (TiAlMoN), die mechanischen Eigenschaften (Härte, E-Modul, Haftung), die strukturellen Eigenschaften (Phasenbestand) wie auch die Oxidationseigenschaften (Wachstum einer Oxidschischt bei 800°C für 1 h in Umgebungsatmoshpäre) der Gesamtschicht nicht signifikant verändert werden. Das ermöglicht gezielt die Architektur sowie die Zusammensetzung für diverse HT-Applikationen in Bezug auf Beständigkeit gegen Abrasiv- und Adhäsiv-Verschleiss zu optimieren.

**Patentansprüche**

1. Beschichtung mit Mehrlagenschichtsystem und Top-Schmierschicht wobei das Mehrlagenschichtsystem mindestens eine HT-Schicht enthält und die Top-Schmierschicht eine Zusammensetzung gemäss $Mo_a$-$X_b$-$Y_c$ besitzt, wobei a, b und c die atomare Konzentration der jeweiligen Bestandteile angibt und a+b+c=1 gilt und $0 \leq b < a$ und $0 \leq c < a$ gilt, mit X als variablem Metal-Bestandteil: B, Si, V, W, Zr, Cu und Ag oder eine Kombination daraus und mit Y als variablem Nichtmetall-Bestandteil: C, O und N oder eine Kombination daraus, wobei das Mehrlagenschichtsystem mindestens eine schmieraktive Schicht umfasst, **dadurch gekennzeichnet; dass** die mindestens eine schmieraktive Schicht eine Ti-Al-Mo-N Schicht ist, die einen gemittelten vorzugsweise mit EDX bei 10kV gemessenen Mo-Gehalt von 20-60 at.%, bevorzugt 25-35 at.%, besonders bevorzugt 30 at.% hat.

2. Beschichtung nach. Anspruch 1, **dadurch gekennzeichnet, dass** die mindestens eine schmieraktive Schicht aus Nanolayer mit MoN reichen und MoN verarmten Nanolagen aufgebaut ist.

3. Beschichtung nach Anspruch 2, **dadurch gekennzeichnet, dass** die MoN reichen Nanolagen zwischen 10-60nm, bevorzugt zwischen 20-50nm, besonders bevorzugt zwischen 30-40nm und äusserst bevorzugt bei 40nm liegen.

**Claims**

1. Coating with a multi-layer coating system and a top lubricating layer, wherein the multi-layer coating system contains at least one HT layer and the top lubricating layer has a composition according to $Mo_a$-$X_b$-$Y_c$, wherein a, b and c indicate the atomic concentration of the respective constituents, and a+b+c=1, and $0 \leq b < a$ and $0 \leq c < a$, with X being a variable metal constituent: B, Si, V, W, Zr, Cu and Ag or a combination thereof and with Y being a variable non-metallic constituent: C, O and N or a combination thereof, wherein the multi-layer coating system comprises at least one actively lubricating layer, **characterized in that** the at least one actively lubricating layer is a Ti-Al-Mo-N layer which has an averaged Mo content preferably measured by EDX at 10kV of 20-60 at%, more preferably 25-35 at%, even more preferably 30 at%.

2. Coating according to claim 1, **characterized in that** the at least one actively lubricating layer is formed of nano-layers with MoN-rich nano-layers and nano-layers poor in MoN.

**3.** Coating according to claim 2, **characterized in that** the MoN-rich nano-layers are between 10-60 nm, preferably between 20-50 nm, more preferably between 30-40 nm and extremely preferably 40 nm.

## Revendications

**1.** Revêtement avec système multicouche et couche de finition lubrifiante, dans lequel le système multicouche contient au moins une couche HT (couche de support) et la couche de finition lubrifiante a une composition selon $Mo_a\text{-}X_b\text{-}Y_c$, dans laquelle a, b, et c désignent la concentration atomaire des composants respectifs et

$$a+b+c=1 \, ;$$

et

$$0 \leq b < a \, ;$$

et

$$0 \leq c < a \, ;$$

avec X étant le composant métallique variable: B, Si, V, W, Zr, Cu et Ag ou une combinaison de ceux-ci et avec Y étant le composant non-métallique variable: C, O et N ou une combinaison de ceux-ci, dans lequel le système multicouche comprend au moins une couche lubrifiante, **caractérisé par le fait que** ladite au moins une couche lubrifiante est une couche Ti-Al-Mo-N, qui a une teneur de Mo moyennée, préférablement par EDX à 10 kV, de 20-60 % atomique, préférablement 25-35 % atomique, mieux encore 30 % atomique.

**2.** Revêtement selon la revendication 1, **caractérisé par le fait que** ladite au moins une couche lubrifiante est constituée de nanocouches avec des nanocouches riches en MoN et des nanocouches appauvries en MoN.

**3.** Revêtement selon la revendication 2, **caractérisé par le fait que** les nanocouches riches en MoN sont compris entre 10-60 nm, préférablement entre 20-50 nm, mieux encore entre 30-40 nm, et encore plus préférablement 40 nm.

Figur 1

Top-Schmierschicht

Mehrlagenschichtsystem

Figur 2

Figur 3